# EUROPÄISCHE PATENTANMELDUNG

(11) **EP 1 587 085 A1**
(43) Veröffentlichungstag der Anmeldung: **19.10.2005**
(21) Anmeldenummer: 04008969.0
(22) Anmeldetag: 15.04.2004
(51) Int. Cl.: G11B 7/09

(54) **Gerät zum Lesen und/oder Beschreiben optischer Aufzeichnungsträger**

(71) Anmelder: DEUTSCHE THOMSON-BRANDT GMBH, 78048 Villingen-Schwenningen (DE)
(72) Erfinder: Burkart, Harald, 78054 Villingen-Schwenningen (DE); Dupper, Rolf, 78050 Villingen-Schwenningen (DE); Suzuki, Tsuneo, 78087 Möchweiler (DE)
(74) Vertreter: Thies, Stephan

(57) **Zusammenfassung**

Die vorliegende Erfindung betrifft ein Gerät zum Lesen und/oder Beschreiben optischer Aufzeichnungsträger, aufweisend einen optischen Abtaster (1) zum Erzeugen eines Abtaststrahls und zum Detektieren eines vom optischen Aufzeichnungsträger beeinflußten Detektionsstrahls, und einem Linsenhalter (2) zum Fokussieren des Abtaststrahls auf den optischen Aufzeichnungsträger, wobei der Linsenhalter (2) durch Haltedrähte (4) mit dem Abtaster (1) mechanisch und elektrisch gekoppelt ist.

Aufgabe der Erfindung ist es, ein derartiges Gerät zu verbessern.

Erfindungsgemäß ist dazu vorgesehen, daß zumindest einer der Haltedrähte ein Mehrleitungsdraht (24, 34, 44) ist.

## Beschreibung

Die vorliegende Erfindung betrifft ein Gerät zum Lesen und/oder Beschreiben optischer Aufzeichnungsträger, welches einen optischen Abtaster zum Erzeugen eines Abtaststrahls und zum Detektieren eines vom optischen Aufzeichnungsträger beeinflußten Detektionsstrahls aufweist und einen Linsenhalter zum Fokussieren des Abtaststrahls auf den optischen Aufzeichnungsträger, wobei der Linsenhalter durch Haltedrähte mit dem Abtaster mechanisch und elektrisch gekoppelt ist. Die mechanische Kopplung ermöglicht ein bewegliches Halten des Linsenhalters am Abtaster während die elektrische Kopplung zur Zuleitung von elektrischem Strom zu Aktuatorspulen dient, die am Linsenhalter angeordnet sind und für Fokusregelung, Spurführung etc. genutzt werden. Als optische Aufzeichnungsträger kommen beispielsweise CD, DVD aber auch andere optische Aufzeichnungsträger in Frage.

Aufgabe der vorliegenden Erfindung ist es, ein derartiges Gerät zu verbessern.

Erfindungsgemäß ist dazu vorgeschlagen, zumindest einen der Haltedrähte als Mehrleitungsdraht auszubilden. Im Mehrleitungsdraht sind dabei zwei oder drei oder auch eine noch höhere Anzahl elektrischer Leiter vereint. Dies hat den Vorteil, daß das mechanische Verhalten des Mehrleitungsdrahtes demjenigen eines Einzeldrahtes angenähert oder sogar gleich ist, während es gleichzeitig ermöglicht ist, mehrere elektrische Signale unabhängig voneinander zwischen Linsenhalter und Abtaster zu übermitteln. Für die mechanische Kopplung des Linsenhalters mit einem Abtaster hat sich eine Vierdrahtanordnung als sehr günstig herausgestellt. In bestimmten Situationen ist es allerdings erwünscht oder notwendig, eine höhere Anzahl an elektrischen Signalen zu übertragen, beispielsweise wenn auf dem Linsenhalter ein Sensor angeordnet ist oder wenn mehr als zwei unabhängige Aktuatoren auf dem Linsenhalter angeordnet sind. Mit der erfindungsgemäßen Lösung wird erreicht, daß eine erhöhte Anzahl elektrischer Verbindungen ermöglicht ist, ohne von der mechanischen Vierdrahtankopplung abzuweichen.

Vorteilhafterweise ist der Mehrleitungsdraht ein Koaxialdraht. Dies hat den Vorteil, daß die mechanischen Eigenschaften eines Koaxialdrahts besonders nahe an denen eines Einzeldrahtes liegen und er somit in herkömmlichen Abtastern ohne große mechanische Anpassungen einsetzbar ist.

Erfindungsgemäß ist vorgesehen, daß der Koaxialdraht aus einem Kern besteht, der von einer Isolationsschicht umgeben ist, auf die wiederum eine Metallschicht aufgebracht ist. Bei einem Dreileitungsdraht ist entsprechend eine weitere Isolationsschicht und darauf angebrachte Metallschicht vorgesehen. Für entsprechende Vielfachleiter ein entsprechendes Vielfaches. Insbesondere, wenn die Metallschicht auf die Isolierschicht aufgedampft oder auf andere Art und Weise abgeschieden ist, beispielsweise in einem Tauchbad, ist deren Herstellung relativ günstig. Durch die geringe zusätzliche Schichtdicke ist die mechanische Eigenschaft des Kerns kaum verändert. Je nach Anforderung der Signalübertragung reicht dabei schon ein geringer wirksamer Querschnitt für die Metallschicht aus.

Zur Kontaktierung des Kern- und Metallschicht aufweisenden Koaxialdrahts ist vorgesehen, ein Lot mit einem Schmelzpunkt, der niedriger als die maximal zulässige Temperatur der Isolationsschicht ist, zu verwenden, um die Metallschicht zu kontaktieren, während zum Kontaktieren des Kerns ein Lot mit entsprechend höherem Schmelzpunkt vorgesehen ist. Bei mehreren Metallschichtlagen sind entsprechend mehrere unterschiedliche Schmelzpunkte vorgesehen. Dies hat den Vorteil, daß kein Erfordernis mehr besteht, den Koaxialdraht abzuisolieren, sondern allein durch die Löttemperatur wird die Abisolation bewirkt beziehungsweise bleibt die Isolationsschicht erhalten im Fall der Kontaktierung der Metallschicht. Weiterhin ist es nicht erforderlich, einen bereits abisolierten Mehrleitungsdraht mechanisch exakt zu den Kontaktpunkten zu positionieren, da die zwangsweise Abisolation direkt an den Lötpunkten erfolgt. Ebenfalls im Rahmen der Erfindung liegt es, die Abisolierung durch Erhitzen über die maximal zulässige Temperatur der Isolierschicht vorzunehmen, auch wenn beide Lötverbindungen bei gleicher Temperatur erfolgen. Eine weitere Alternative besteht darin, den Mehrleitungsdraht am vorderen Ende kegelförmig anzuspitzen, ähnlich dem Spitzen eines Bleistifts, und dabei mit geeignetem Winkel abzuisolieren.

Alternativ dazu ist vorgesehen, daß der Mehrleiterdraht aus mehreren verdrillt oder parallel angeordneten Einzeldrähten besteht. Dabei ist es möglich, einen oder mehreren der Einzeldrähte selbst als Koaxialdraht vorzusehen. Neben Verdrillen oder paralleler Anordnung sind auch andere geeignete geometrische Anordnungen im Rahmen der Erfindung liegend, beispielsweise das Umwickeln eines gestreckten Kerndrahtes mit einem oder mehreren weiteren Einzeldrähten. Ein Vorteil des Aufbaus des Mehrleiterdrahts aus mehreren Einzeldrähten besteht in dessen kostengünstiger Herstellung, da beispielsweise das Verdrillen von Einzeldrähten ein in großem Maßstab angewandtes Verfahren ist. Auch das Anordnen paralleler Einzeldrähte kann im Herstellungsprozeß kostengünstiger sein als andere vorgeschlagene Lösungen. Insbesondere, wenn drei oder mehr Drähte verdrillt oder auch parallel angeordnet werden, ergibt dies einen Querschnitt, der demjenigen eines Einzeldrahts grob angenähert ist. Die mechanischen Eigenschaften sind somit relativ ähnlich demjenigen eines Einzeldrahts.

Erfindungsgemäß ist vorgesehen, daß die Einzeldrähte aus unterschiedlichen Materialien bestehen, beispielsweise der eine Einzeldraht aus Kupfer, der andere aus Aluminium oder unterschiedliche Kupferlegierungen für unterschiedliche Einzeldrähte vorgesehen sind. Auch die Verwendung gleicher Materialien für den Metallkern aber unterschiedliche Isolieraußenschichten liegt im Rahmen der Erfindung. Unterschiedliche Biegesteifigkeiten unterschiedlicher Materialien für die Einzeldrähte ist oftmals gewünscht, um einen sogenannten passiven Tilt-Effekt hervorzurufen, d.h. das Verkippen des Linsenhalters aufgrund von Fokus- oder Spurnachführungsbewegungen ohne ein spezielles Tilt-Nachführungssignal. Damit läßt sich beispielsweise eine Grobnachführung für den Tilt erreichen, bei der lediglich eine Feinnachführung über spezielle Tilt-Aktuatoren erforderlich ist. Das unterschiedliche farbliche Aussehen unterschiedlicher Materialien hat den weiteren Vorteil, daß es die Identifikation des korrekten zu kontaktierenden oder einzusetzenden Drahts beziehungsweise Teildrahts bei der Montage vereinfacht.

Bei einer Vierdrahtaufhängung ist vorgesehen, die Einzeldrähte auf der dem optischen Aufzeichnungsträger zugewandten Seite des Linsenhalters anzuordnen und Mehrleitungsdrähte auf der entsprechend abgewandten Seite. Dies hat den Vorteil erhöhter Stabilität und eines gewünschten passiven Tilt-Effekts.

Vorteilhafterweise sind einem Mehrfachdraht beide Leitungen einer am Linsenhalter angeordneten Spule zugeordnet. Dies hat unter anderem den Vorteil, daß durch den Stromfluß entstehende Magnetfelder sich gegenseitig aufheben und somit mögliche Störeffekte vermindern.

Weitere Vorteile der Erfindung sind in der nachfolgenden Beschreibung von Ausführungsbeispielen angegeben. Dabei zeigen:
- Fig. 1: bekanntes Gerät
- Fig. 2: Gerät gemäß der Erfindung,
- Fig. 3: Querschnitt durch einen ersten erfindungsgemäßen Mehrleiterdraht,
- Fig. 4: Querschnitt durch einen zweiten erfindungsgemäßen Mehrleiterdraht, und
- Fig. 5: Querschnitt durch einen dritten erfindungsgemäßen Mehrleiterdraht.

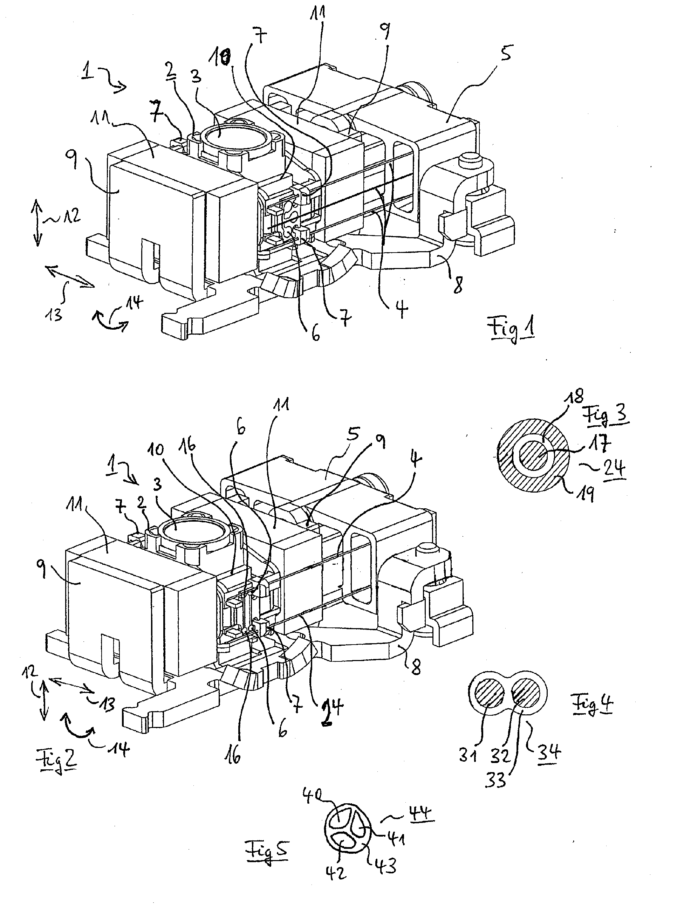

Fig. 1 zeigt einen Teil eines optischen Abtasters 1 eines bekannten Gerätes. Man erkennt den Linsenhalter 2, eine darin angeordnete Fokuslinse 3 sowie Haltedrähte 4, mittels deren der Linsenhalter 2 mit einer Halterung 5 mechanisch und elektrisch gekoppelt ist. Zur elektrischen Kopplung dienen Kontaktierungspunkte 6 am Linsenhalter 2, während zur mechanischen Kopplung mechanische Verbinder 7 vorgesehen sind. Man erkennt, daß zwei mechanische Verbinder 7 auf der dem Betrachter zugewandten Seite und zwei weitere Verbinder 7, von denen einer nicht sichtbar ist, auf der dem Betrachter abgewandten Seite des Linsenhalters 2 angeordnet sind, wodurch eine mechanische Vierdrahtaufhängung des Linsenhalters 2 realisiert ist. Der mittlere Haltedraht 4 dient im wesentlichen zur elektrischen Kontaktierung und trägt nur geringfügig zur mechanischen Aufhängung bei. Im dargestellten Ausführungsbeispiel sind die Haltedrähte 4 noch nicht mit den Kontaktierungspunkten 6 elektrisch verbunden, um die Details besser sichtbar zu machen.

Die Halterung 5 ist mit einem metallischen Grundelement 8 verbunden, welches Laschen 9, 10 zum Bilden eines magnetischen Rückschlusses mit Dauermagneten 11 bildet. Die im Zwischenraum zwischen Dauermagnet 11 und Lasche 10 befindlichen Feldlinien liegen innerhalb hier nicht sichtbarer Magnetspulen, die als Aktuatoren für Einstellung des Fokus in Richtung des Doppelpfeils 12, der Spurführung in Richtung des Doppelpfeils 13 oder des Tilt-Ausgleichs entsprechend dem gebogenen Doppelpfeil 14 dienen.

Fig. 2 zeigt ein Gerät gemäß der Erfindung. Gleiche Teile sind mit gleichen Bezugszeichen versehen wie zu Fig. 1 und nicht notwendigerweise hier erneut beschrieben. Man erkennt, daß in diesem Ausführungsbeispiel nur zwei Haltedrähte 4, 24 angeordnet sind, wobei der obere Haltedraht 4 ein Einzeldraht und der untere ein Koaxialdraht 24 ist. Zu jedem Draht sind zwei Kontaktierungspunkte 6, 16 dargestellt, wobei der der Halterung 5 näherliegende Kontaktierungspunkt 6 mit einem Lot niedrigeren Schmelzpunkts versehen ist als der andere Kontaktierungspunkt 16. Im Fall eines Einzeldrahts 4 wird nur einer der beiden Kontaktierungspunkte 6, 16 verwendet, während im Fall eines Koaxialdrahts 24 der Kontaktierungspunkt 6 zum Kontaktieren der äußeren Metallschicht dient, während der Kontaktierungspunkt 16 mit höherem Schmelzpunkt zur Kontaktierung des Kerns des Koaxialdrahts 24 dient. Beim Kontaktieren schmilzt die Isolationsschicht weg. Es ist darauf zu achten, daß die Isolationsschicht soweit abreißt, daß ein Kurzschluß zwischen den beiden Leitern verhindert ist. Mit geeigneten Materialien ist dies erreichbar.

Fig. 3 zeigt einen Querschnitt durch einen als Koaxialdraht 24 ausgebildeten ersten erfindungsgemäßen Mehrlagendraht. Er weist einen metallischen Kern 17 auf, der von einer Isolationsschicht 18 umgeben ist, auf welche eine äußere Metallschicht 19 aufgebracht ist. Im dargestellten Beispiel weist die äußere Metallschicht 19 einen wesentlich größeren Querschnitt als der Kern 17 auf und bestimmt somit die wesentlichen mechanischen Eigenschaften des Koaxialdrahts 24. Alternativ dazu besteht die Möglichkeit, den Kern 17 relativ zur Metallschicht 19 größer auszubilden, um die mechanischen Eigenschaften des Koaxialdrahts 24 im wesentlichen durch den Kern 17 bestimmen zu lassen. Geeignete Variationen liegen im Rahmen der Erfindung.

Fig. 4 zeigt einen Querschnitt durch einen zweiten erfindungsgemäßen Mehrleiterdraht 34, der aus zwei Einzeldrähten 31, 32 besteht, welche mittels einer isolierenden Umhüllung 33 miteinander verbunden sind. Alternativ dazu können beide Einzeldrähte 31, 32 eine separate Isolationsschicht aufweisen und durch eine weitere Materialschicht miteinander verbunden sein oder alternativ dazu durch mechanisches Verdrillen miteinander verbunden sein. Auch andere Querschnitte als der hier angedeutete kreisförmige Querschnitt der beiden Einzeldrähte 31, 32 liegt im Rahmen der Erfindung.

Fig. 5 zeigt einen Querschnitt durch einen dritten erfindungsgemäßen Mehrleiterdraht 44. Der Mehrleiterdraht 44 besteht aus drei Einzeldrähten 40, 41, 42, deren Querschnitt so gestaltet ist, daß die sie verbindende Umhüllung 43 eine nahezu kreisförmige Außenbegrenzung aufweist. Ein derartiger Mehrleiterdraht 44 kommt in seinen mechanischen Eigenschaften demjenigen eines Einzeldrahts mit kreisförmigem Querschnitt besonders nahe. Sowohl der Mehrleiterdraht 34 der Fig. 4 als auch der Mehrleiterdraht 44 der Fig. 5 können sowohl parallel angeordnete Einzeldrähte 31, 32 beziehungsweise 40, 41, 42 aufweisen als auch entsprechende verdrillte Drähte.

## Patentansprüche

1. Gerät zum Lesen und/oder Beschreiben optischer Aufzeichnungsträger, aufweisend einen optischen Abtaster (1) zum Erzeugen eines Abtaststrahls und zum Detektieren eines vom optischen Aufzeichnungsträger beeinflußten Detektionsstrahls, und einem Linsenhalter (2) zum Fokussieren des Abtaststrahls auf den optischen Aufzeichnungsträger, wobei der Linsenhalter (2) durch Haltedrähte (4) mit dem Abtaster (1) mechanisch und elektrisch gekoppelt ist, **dadurch gekennzeichnet, daß** zumindest einer der Haltedrähte ein Mehrleitungsdraht (24, 34, 44) ist.

2. Gerät gemäß Anspruch 1, **dadurch gekennzeichnet, daß** der Mehrleitungsdraht ein Koaxialdraht (24) ist.

3. Gerät gemäß Ansprüche 2, **dadurch gekennzeichnet, daß** der Koaxialdraht (24) aus einem Kern (17), einer diesen umgebenden Isolationsschicht (18), und einer auf diese aufgebrachte Metallschicht (19) besteht.

4. Gerät gemäß Anspruch 3, **dadurch gekennzeichnet, daß** zur Kontaktierung der äußeren Metallschicht (19) ein Lot mit einem Schmelzpunkt vorgesehen ist, der niedriger als die maximal zulässige Temperatur der Isolationsschicht (18) ist, und zur Kontaktierung des Kerns (17) ein Lot mit entsprechend höherem Schmelzpunkt.

5. Gerät gemäß einem der vorhergehenden Ansprüche, **dadurch gekennzeichnet, daß** der Mehrleiterdraht (34, 44) aus mehreren verdrillt oder parallel angeordneten Einzeldrähten (31, 32; 40, 41, 42) besteht.

6. Gerät nach Anspruch 5, **dadurch gekennzeichnet, daß** die Einzeldrähte (31, 32; 40, 41, 42) aus unterschiedlichen Materialien bestehen.

7. Gerät gemäß einem der vorhergehenden Ansprüche, **dadurch gekennzeichnet, daß** bei einer Vierdrahtaufhängung Einzeldrähte (4) auf der dem optischen Aufzeichnungsträger zugewandten Seite des Linsenhalters (2) angeordnet sind und Mehrleitungsdrähte (24, 34, 44) auf der abgewandten Seite.

8. Gerät gemäß einem der vorhergehenden Ansprüche, **dadurch gekennzeichnet, daß** einem Mehrfachdraht (24, 34, 44) beide elektrischen Leitungen einer Spule des Linsenhalters (2) zugeordnet sind.
